Europäisches Patentamt

European Patent Office

Office européen des brevets

(11) Publication number: **0 070 590**
A1

# (12) EUROPEAN PATENT APPLICATION

(21) Application number: **82200846.2**

(51) Int. Cl.³: **G 06 K 7/10**, G 06 K 9/20

(22) Date of filing: **07.07.82**

(30) Priority: **21.07.81 NL 8103439**

(43) Date of publication of application: **26.01.83**
Bulletin 83/4

(84) Designated Contracting States: **DE FR GB IT NL**

(71) Applicant: **Océ-Nederland B.V., St. Urbanusweg 102,
NL-5914 CC Venlo (NL)**

(72) Inventor: **Eertink, Bastiaan Bernard Boele, Land van
Kessel 7, Grubbenvorst (NL)**
Inventor: **van Esch, Hendrikus Johannes, Middelberg 39,
Veldhoven (NL)**

(74) Representative: **Bleukx, Lucas Lodewijk Maria, Ir. et al,
Océ-Nederland B.V. Patents & Information Dept.
Postbus 101, NL-5900 MA Venlo (NL)**

(54) **Light-sensitive detection circuit.**

(57) Light-sensitive detection circuit in which the output
signal of a light-sensitive element (1) is stabilised by
means of a feed-back to an element (2) having a voltage
dependent resistance, which element (2) is connected in
series with the light-sensitive element (1) between two
points of fixed potential.

-1-

# LIGHT-SENSITIVE DETECTION CIRCUIT

The invention relates to a light-sensitive detection circuit comprising a light-sensitive element, a comparator, a levelling and correction circuit and a stabilisation circuit, the output of the comparator being connected to the output of the detection circuit, the output of the levelling and correction circuit being connected to the stabilisation circuit,and the levelling and correction circuit supplying an output signal to the stabilisation circuit as a result of which the output signal from the light-sensitive element is stabilised.

Such a circuit is known from Dutch patent application 7509460. This known circuit is employed particularly for detecting markings on the rear side of the photo-conductive belt in an electrophotographic device. For example black areas can be applied at the rear side of a light-coloured belt,or lighter-coloured, e.g. silver-coloured, areas can be applied at a darker rear side. These areas are detected by means of a light-emitting diode, LED, which emits light towards the rear of the photo-conductive belt, the light which is reflected being intercepted by the light-sensitive element, especially by a photo-sensitive transistor. With this known circuit the light-sensitive element is connected by way of a resistor to the supply voltage and the LED is connected via a transistor to the supply voltage. The quantity of light emitted by this LED thus depends on the state of conductivity of this transistor.

In the known circuit, mentioned above, the light-sensitive element supplies via a separation stage an output signal which on the one hand is fed to the input of the levelling and correction circuit, and on the other hand is fed to a first input of the comparator. The other input of the comparator is connected to a fixed reference voltage. This reference voltage is so selected that on detection of the rear side of the belt, the output signal from the light-sensitive element is lower than the reference voltage, so that the comparator output is at a first level, and on detection of the marking, when more or less light is stagewise intercepted, the output signal is then higher than the reference voltage, so that the comparator output is then at a second level, or conversely.

With light-sensitive elements such as photo-transistors, due to sample variations and ageing phenomena, or variations of the ambient conditions such as for example temperature fluctuations, for the same light yield from the illumination source, such as a LED, the currents through the photo-transistor can vary from each other by a factor of 100 or more.

Thus, with the known circuit, the output signal from the light-sensitive element is fed to a levelling and correction circuit provided with a diode, a capacitor and a resistor. The output from this levelling and correction circuit provides a signal by means of which the current passage through the light source, i.e. through the LED, is influenced. During detection of the rear side of the belt the capacitor will be charged up to a constant level which corresponds to the state of conductivity of the light-sensitive element. The voltage across the capacitor now, via a control stage, serves to adjust the current through the LED at a certain value.

If now, for example the light-sensitive element becomes less sensitive, or the light output from the LED is reduced, then the output voltage from the light-sensitive element will drop, with the result that the voltage across the capacitor increases. The result is that via a control stage the current through the LED becomes greater, so that the reduced sensitivity of the light-sensitive element or the reduced light output from the LED is compensated. With an increase in the sensitivity of the light-sensitive element, or in the light output from the LED, then conversely the current through the LED will be reduced.

To ensure that this feed-back does not come into action directly upon detection of a marking, the RC-time of the discharge path or charge path across the capacitor must be selected so high that the transient voltage variation at the output of the light-sensitive element upon detection of a marking does not lead to a change in the setting of the LED current.

The output voltage from the light-sensitive element must preferably be set at half the supply voltage level, so that the detection circuit is the most sensitive, i.e. that the output voltage change per unit of change in light intensity is the greatest. The reference voltage which is supplied to the second input of the comparator is matched to this setting.

Now however, in the event of a change in the sensitivity of the light-sensitive element, or a change in the light output from the LED, the setting of the detection circuit will vary. If the sensitivity of the light-sensitive element is reduced, then the detection circuit will adjust itself in such a way that the LED emits more light. This means that the output voltage level of the light-sensitive element becomes lower, the voltage across the capacitor increases, and thus the current through the LED increases. As a result of this permanent drop in the output voltage level of the light-sensitive element, there is a variation from the preferential setting, in which this output voltage level is at half the supply voltage level, so that the sensitivity of the circuit as a whole reduces. Furthermore the relationship between the output voltage level and the reference voltage will no longer be optimum. Furthermore an increase in the sensitivity of the light-sensitive element leads to a change in the setting.
The object of the present invention is to eliminate these disadvantages.

According to the present invention this object is achieved with a light-sensitive detection circuit of the type described in the preamble in that the stabilisation circuit includes a stabilising element with voltage-dependent resistance which is connected in series with the light-sensitive element between two points of fixed potential.
In the circuit according to the invention the LED which functions as the light source is given a fixed setting and the element having voltage-dependent resistance is controlled in such a way that the voltage at the junction between this element with voltage-dependent resistance and the light-sensitive element is maintained as far as possible at a fixed potential.

Preferred embodiments with associated further advantages, together with further details of the detection circuit according to the invention, will be discussed in greater detail by reference to the drawings.

Fig. 1 shows a first embodiment of the circuit according to the invention.

Fig. 2 shows a second embodiment of the circuit according to the invention.

Fig. 3 shows a third embodiment of the circuit according to the invention.

Fig. 4 shows a fourth embodiment of the circuit according to the invention.

Fig. 5 shows a fifth embodiment of the circuit according to the invention.

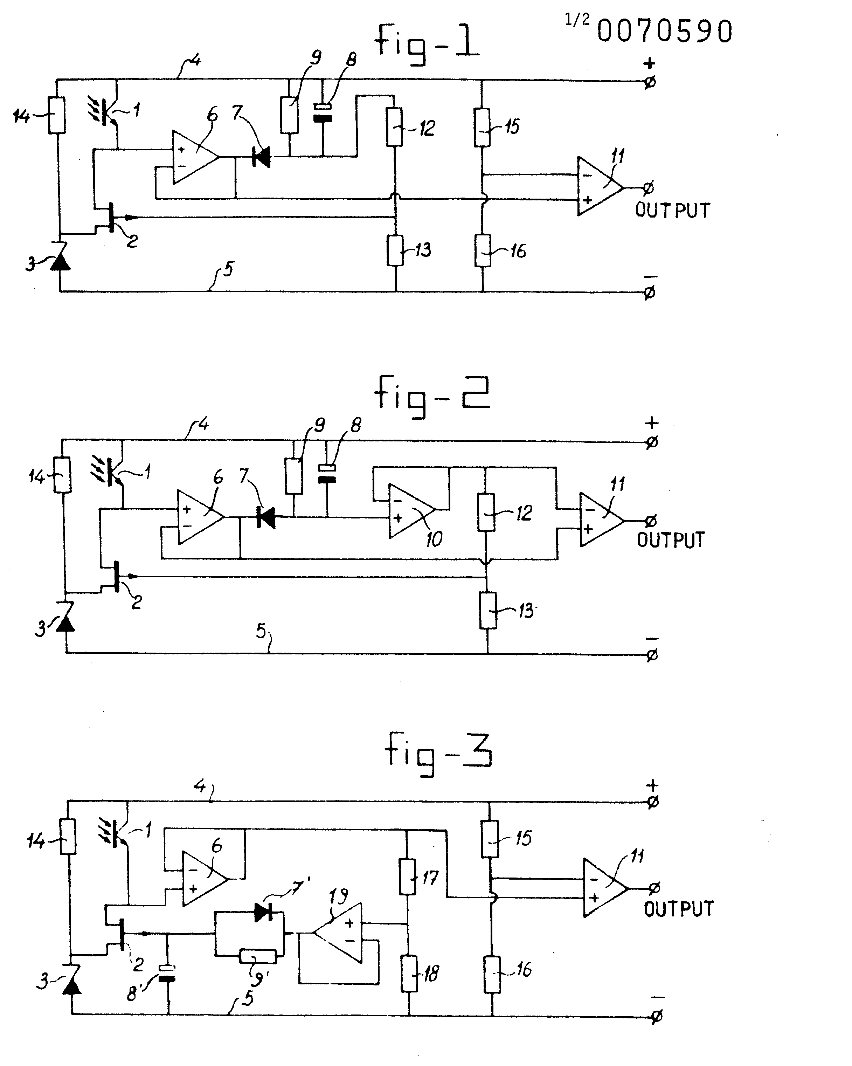

In Fig. 1 the photo-sensitive transistor 1 is connected in series with the field effect transistor (FET) 2 and the zener diode 3 between the positive supply voltage lead 4 and the negative supply voltage lead 5. The voltage at the junction between the emitter of the photo-transistor 1 and the drain of the FET 2 is supplied to the positive input of the operational amplifier 6, the output of which is fed back to the negative input. The output of the operational amplifier 6 is firstly connected to the positive input of comparator 11 and secondly via the diode 7 it is connected to the junction of the parallel connection of the capacitor 8 and the resistor 9. The second junction of the parallel connection of the capacitor 8 and the resistor 9 is connected to the positive supply voltage connection. The first-mentioned junction of resistor 9, capacitor 8 and diode 7 is connected to the one end of a voltage divider having resistors 12 and 13, the other end of which is connected to the negative supply voltage connection. The junction between the resistors 12 and 13 is connected to the gate of the FET 2. The junction between the drain of the FET 2 and the zener diode 3 is connected via a resistor 14 to the positive supply voltage connection 4. The negative input of comparator 11 is maintained, via the voltage divider, having resistors 15 and 16, at a fixed reference potential.

In the circuit shown in Fig. 1 the feed-back-connected operational amplifier 6 serves only as buffer stage. The light-sensitive element mentioned in the preamble is formed by the photo-transistor 1, the comparator is formed by the comparator 11, the levelling and correction circuit comprises the diode 7, the resistor 9 and the capacitor 8, whilst the FET 2 forms the element with voltage-dependent resistance of the voltage stabilisation circuit.

In the following a description will be given of the operation of this detection circuit, the basis being that light markings against a darker background have to be scanned, i.e. that on each occasion the transistor will be unilluminated or only slightly illuminated for relatively a long period and that during the passage of the markings a relatively large amount of light will arrive at the transistor 1 during a short period.

During the detection of the background if the transistor 1 receives relatively little light, then the photo-transistor 1 will not conduct, or hardly conduct at all, so that the voltage level at the emitter of transistor 1 and hence also at the output of operational amplifier 6 will be low. This output signal from the operational amplifier 6 is fed to the positive input of comparator 11. The negative input of this comparator is connected via resistors 15 and 16 to a fixed reference potential. This reference potential is greater than the voltage across the positive input, so that the output level of the comparator will be low during detection of the backgroud. If during detection of a marking by the transistor 1 a relatively large amount of light is received, then this transistor will conduct to a greater extent, so that the emitter voltage of transistor 1 and thus the output voltage of the operational amplifier 6 will become higher, and actually higher than the reference voltage across the negative input of comparator 11. As a result the output level of comparator 11 will be high during detection of the marking.

The output of operational amplifier 6 is also connected to the diode 7 and, via this diode, the capacitor 8 will now be charged up to the level of the voltage across the output of the operational amplifier 6, reduced by the voltage drop across the diode 7. The junction between the diode 7, resistor 9 and capacitor 8 is at the same time connected via a voltage divider having resistors 12 and 13 to the gate of the field effect transistor FET 2. The RC-time of resistor 9 and capacitor 8 is selected to be of such length that during detection of a marking, whereby the output voltage of the operational amplifier 6 becomes transiently high, the capacitor 8 cannot discharge, or will hardly be capable of discharging across resistor 9. The level of the output signal from transistor 1, and thus -via the operational amplifier 6 and the voltage divider having resistors 12 and 13- the level of the gate voltage of FET 2, depends on the amount of light which arrives at transistor 1 during detection of the background.

If now, for example, as a result of decreased sensitivity of the transistor 1 or decreased light emission from the light source, which is not shown in the Figure, the voltage across the output of transistor 1 should gradually reduce, this will lead to further charging up of capacitor 8 and consequently to a reduction in the voltage at the gate of FET 2. Consequently this FET 2 will be less conductive and in this way the reduced conduction of transistor 1 will be compensated in such a way that the voltage across the positive input of the operational amplifier 6 will remain almost constant.

If, during detection of the background, for some reason or other, e.g. an increase in the sensitivity of transistor 1 or greater light emission from the light source which is not shown in the Figure, the voltage at the output of transistor 1 and hence at the output of operational amplifier 6 should increase, then capacitor 8 will discharge to some extent across resistor 9 and by this means, via the resistors 12 and 13 a higher voltage will be supplied to the gate of FET 2, as a result of which this FET 2 will be controlled so as to open further. In this case also the increased conduction of photo-transistor 1 will be compensated by an increased conduction of FET 2 in such a way that the voltage at the positive input of the operational amplifier 6 will remain almost constant.

It should be noted that the zener diode 3 and the resistor 14 are provided only for purposes of setting the FET 2. FET 2 can also be set in other ways.

Fig. 2 shows a second embodiment of a detection circuit according to the invention. In this Figure corresponding sub-components are denoted by the same reference numbers. If this Figure is studied more closely it can be seen that the negative input of the comparator 11 in this embodiment is not connected to a fixed reference voltage, but is connected via a feed-back-connected operational amplifier 10 to capacitor 8. As in the embodiment first shown, the voltage for the gate of the FET 2 is supplied by the voltage divider from resistors 12 and 13, which in this case is connected via this operational amplifier 10 to capacitor 8. In this embodiment the voltage across the capacitor 8 is thus also employed as reference voltage for the comparator 11. During detection of the background the voltage across the negative input of comparator 11 will be higher than the voltage across the positive input of comparator 11, due to the voltage drop across diode 7. When a marking is detected the output voltage of the operational amplifier 6 will transiently increase. Because of the relatively long RC-time of resistor 9 and capacitor 8, the voltage across the capacitor 8 and hence the voltage at the negative input of comparator 11 will remain almost constant, so that during detection of the marking the output voltage of the comparator will proceed from low to high. The operation of this detection circuit, especially the influence of the feed-back path via the FET 2 on the behaviour of the detection circuit, is otherwise identical to the operation of the first embodiment of the detection circuit described above.

Fig. 3 shows a third embodiment of the detection circuit according to the invention. In this Figure too corresponding sub-components are indicated by the same reference numbers. The emitter of the photo-sensitive transistor 1 is again connected to the positive input of the operational amplifier 6, the output of which is feed-back connected to the negative input. The output of this operational amplifier 6 is again connected to the positive input of comparator 11. The negative input of comparator 11 is connected to a fixed reference voltage derived from the voltage divider having resistors 15 and 16. The emitter of the photo-sensitive transistor 1 is again connected to the drain of the FET 2, the source of which is set via the resistor 14 and the zener diode 3. The output of the operational amplifier 6 is also, via a voltage divider having resistors 17 and 18, connected to the positive input of the operational amplifier 19, the output of which is fed back to the negative input.The output of the operational amplifier 19 is at the same time, via the parallel combination of the diode 7' and the resistor 9', connected to the one connection of the capacitor 8'and to the gate of the FET 2. The other connection of the capacitor 8' is in this case connected to the negative supply voltage connection.

The operation of this detection circuit upon detection of a marking is identical to the operation of the detection circuit according to Fig. 1.During detection of the background, the voltage across the emitter of the photo-sensitive transistor 1, and thus the output voltage from the operational amplifier 6, will again be at a relatively low level. A part of this relatively low output voltage is transmitted, via the voltage divider having resistors 17 and 18, to the output of the feed-back-connected operational amplifier 19. The capacitor 8' will be charged up via the resistor 9' to the level of the output voltage from the operational amplifier 19. If, for some or other reason,the sensitivity of the photo-transistor 1 reduces, or the light emission from the light source which is not shown in the Figure reduces,then the voltage across the emitter of the photo-transistor 1 will drop. This voltage drop is transmitted, via the operational amplifier 6, resistors 17 and 18, and the operational amplifier 19 to the levelling and correction circuit having diode 7', capacitor 8' and resistor 9'. As a result the capacitor 8' will discharge itself slightly, resulting in a reduced gate voltage for the FET 2, so that this FET 2 will conduct to a lesser extent. This reduced conduction results in compensation of the reduced conduction of the photo-sensitive transistor 1 in the same way as described above for the first two embodiments of the detection circuit according to the invention. Conversely, increased sensitivity or increased light output will result in increasing the conduction of FET 2, as a result of which the increased conduction of the photo-transistor 1 which then occurs is compensated.

It should be noted that the operational amplifiers 6,10 and 19 employed in the Figures 2 and 3 serve only as buffer stages. It will furthermore be clear that the setting of the FET 2 via resistor 14 and zener diode 3 can also be undertaken in another way.

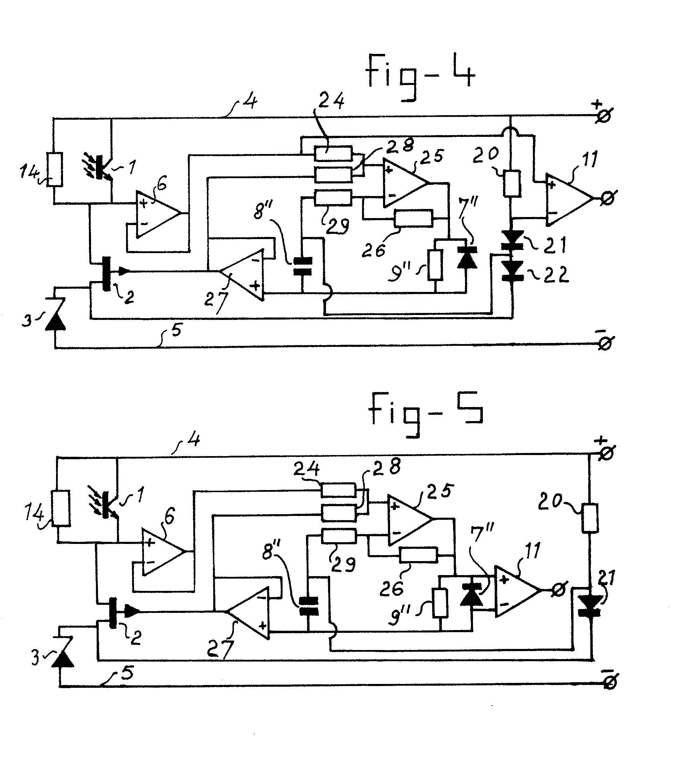

Fig. 4 shows a fourth embodiment of the detection circuit according to the invention. In this Figure too corresponding sub-components are denoted by the same reference numbers. The emitter of the photo-sensitive transistor 1 is again connected to the positive input of the operational amplifier 6, the output of which is feed-back-connected to the negative input. The output of the operational amplifier 6 is again connected to the positive input of comparator 11. The negative input of comparator 11 receives a fixed reference voltage derived from the voltage divider having resistor 20, diodes 21 and 22 and the zener diode 3. The emitter of the photo-sensitive transistor is again connected to the drain of the FET 2, the source of which is set via resistor 20 and zener diode 3. The output of the operational amplifier 6 is also connected via a resistor 24 to the positive input of the operational amplifier 25, the output of which is feed-back-connected to the negative input via resistor 26. The output of operational amplifier 25 is also connected, via diode 7'' and resistor 9'' to the one connection of capacitor 8'' and to the positive input of the operational amplifier 27. The output of the operational amplifier 27 is connected both to its negative input and to the gate of FET 2 and via a resistor 28 to the positive input of operational amplifier 25. The other connection of capacitor 8'' is connected to the voltage divider having resistor 20, diodes 21 and 22 and zener diode 3, and likewise, via resistor 29, to the negative input of operational amplifier 25. Resistors 24 and 28 form a summation circuit, whilst the operational amplifier 25 is connected up as differential amplifier. The operational amplifiers 6 and 27 serve as buffer amplifiers having a low-ohmic output, so that if required longer leads can be used between on the one hand the section formed by elements 1,2,3,6 and 14 and on the other hand the remainder of the circuit represented.

During detection of the background the voltage across the emitter of photo-sensitive transistor 1, and thus the output voltage from operational amplifier 6, will again be at a relatively low level. This voltage is fed via resistor 24 to the positive input of operational amplifier 25. Via the loop formed by resistor 9'', operational amplifier 27 and resistor 28, as well as via the loop formed by resistor 9'', operational amplifier 27, FET 2 , photo-sensitive transistor 1, operational amplifier 6 and resistor 24, the output voltage from the operational amplifier 25 sets itself to an equilibrium value. Since the first-mentioned loop forms an integrating circuit with capacitor 8'', the junction of photo-sensitive transistor 1 and FET 2 sets itself to a voltage which is nearly half the supply voltage.

This setting to half the supply voltage is, with other components otherwise identical, to a very large degree independent of the value of the parameters of FET 2. This as opposed to the circuits shown in Figures 1,2 and 3 in which those parameters certainly have a marked influence on the setting. If thereupon a marking is detected by the photo-conductive transistor 1, then this transistor will receive a relatively large amount of light and exhibit increased conduction. As a result the emitter voltage of transistor 1 and the output voltage of amplifier 6 will increase, and be greater than the reference voltage across the negative input of comparator 11. By this means the output level of comparator 11 will be high during the detection of the marking. Also the output voltage from differential amplifier 25 is high during detection of the marking. This increase, because of the connection of the diode 7'' as shown in Fig. 4, cannot be transmitted via the diode 7'' to the operational amplifier 27. The increase in the output voltage from the differential amplifier 25 is delayed in transmission to the positive input of operational amplifier 27 via the resistor 9'', along which the change in charge of the capacitor 8'' has to take place. The value of resistor 9'' and capacitor 8'' is so selected that the RC-time governed by these is so long that the setting of FET 2 does not essentially change during the detection of the marking. As soon as the marking has passed by the photo-sensitive transistor 1, the emitter voltage of transistor 1 drops again. This reduction gives rise directly to a reduction in the output level both of comparator 11 and of differential amplifier 25. The reduction in the output voltage of differential amplifier 25 is followed directly by a reduction in the voltage across the positive input of operational amplifier 27, because as a result of the former reduction, the diode 7'' is connected in the pass direction and exhibits only a low resistance value, as a result of which the voltage variation across capacitor 8'' can take place extremely rapidly.

A gradual change in the emitter voltage from the photo-sensitive transistor 1 will, as already noted in connection with the description of the circuit shown in Fig. 1, always result in a change in the setting of FET 2, which will be such that the gradual change is opposed. The loop from the output of differential amplifier 25 via resistor 9'', operational amplifier 27 and resistor 28 forms together with capacitor 8'' an integrating circuit. By this means the gradual change will be always fully compensated in the course of time.

Fig. 5 shows a fifth embodiment of the circuit according to the invention. In this Figure too corresponding sub-components are denoted by the same reference numbers. For a description of the circuit according to Fig. 5 reference should be made to the description of the circuit according to Fig. 4, with respect to which the following changes have been made. Diode 21 has been omitted and comparator 11 has its positive input connected to the output of differential amplifier 25, and its negative input connected to the junction of resistor 9'', diode 7'' and capacitor 8''.

Concerning the equilibrium setting of the circuit according to Fig. 5, reference should be made to the description of the circuit according to Fig. 4, as the connection of the inputs of comparator 11, which as is known have a very high impedance, do not affect the operation. The response of comparator 11 to detection of a marking is in this case also once again an increase in the output level of comparator 11 because, as already described in conjunction with Fig. 4, during detection of the background the voltage across the cathode connection of diode 7'' is lower than the voltage across the anode connection, and during detection of a marking the voltage across the cathode connection is greater than the voltage across the anode connection. The sensitivity of this circuit is considerably greater than that of the circuits according to the preceding Figures.

In what has been stated above, when discussing the operation of the embodiments, the basis taken has been a background, which reflects very little light, on which markings which reflect a great deal of light have to be detected. By means of a slight change the circuits illustrated and described can also be employed for detection of a background which reflects a great deal of light having markings which reflect very little light. In that case fundamentally the diodes 7,7' and 7'' respectively in the Figures have to be changed in polarity and the combination of the resistor 9, 9' and 9'' respectively, and capacitor 8, 8' and 8'' respectively must be connected to a lower fixed voltage.

It will furthermore be clear that further modifications and changes are feasible within the framework of the invention. Also it will be clear that the concept of marking in the framework of the invention described should be much wider in scope than the significance which this has in the known state of the art. The detection circuit is extremely useful as a sensor for detecting the presence of an original in the feed path for an original in a copying device. If the sensor has to be placed on one side of the path traversed by the original, by which the light emitted from the light source to the original is reflected to the photo-sensitive transistor 1, the circuits can then be employed in the form as described here. If the light source and the photo-sensitive transistor 1 are placed opposite each other on either side of the path traversed by the original, then the circuits can be employed as described above for the case involving the detection of a background reflecting a great deal of light having markings which reflect very little light.

---------------------

CLAIMS

1.      Light-sensitive detection circuit comprising a light-sensitive element, a comparator, a levelling and correction circuit and a stabilisation circuit, the output of the said comparator being connected to the output of the detection circuit, the output of the levelling and correction circuit being connected to the stabilisation circuit, and the said levelling and correction circuit supplying an output signal to the stabilisation circuit, as a result of which the output signal from the light-sensitive element is stabilised, characterised in that the stabilisation circuit includes a stabilising element (2) with voltage-dependant resistance which is connected in series with the light-sensitive element (1) between two points of fixed potential.

2.      Light-sensitive detection circuit according to claim 1, in which the light-sensitive element is connected to a first input of the comparator, characterised in that the output of the levelling and correction circuit is connected to the second input of the comparator (11).

3.      Light-sensitive detection circuit comprising a light-sensitive element, a comparator, a levelling and correction circuit and a stabilisation circuit, the output of the said comparator being connected to the output of the detection circuit, the said levelling and correction circuit comprising a diode, a resistor element and a capacitor, the output of the said levelling and correction circuit being connected to the stabilisation circuit, and the said levelling and correction circuit providing an output signal to the stabilisation circuit, as a result of which the output signal from the light-sensitive element is stabilised, characterised in that the stabilisation circuit includes a stabilisation element (2) with voltage-dependent resistance which is connected in series with the light-sensitive element (1) between two points of fixed potential, in that the light-sensitive element (1)  is connected to a first input of a summation circuit (24,28), in that the output of the summation circuit (24,28) is connected to a first input of a differential amplifier circuit (25,26,29), the second input of which is conntected to a point of fixed potential, in that the diode (7'') and the resistor element (9'') are connected in parallel with each other and connected in series with the capacitor (8'') between the output of the differential amplifier circuit (25,26,29) and a point of fixed potential, and in that the connection between the resistor element (9'') and the capacitor (8'') is connected to a second input of the summation circuit (24,28) and to the stabilisation circuit.

4.    Light-sensitive detection circuit according to claim 3, characterised in that the inputs of comparator (11) are connected to the anode and cathode respectively of the diode (7'').

5.    Light-sensitive detection circuit according to any of the preceding claims, characterised in that the element with voltage-dependent resistance consists of a field-effect transistor (2).

------------------

Fig-4

Fig-5

European Patent
Office

**EUROPEAN SEARCH REPORT**

0070590
Application number

EP 82 20 0846

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| | --- | | G 06 K 7/10 |
| Y | US-A-4 027 154 (BELL & HOWELL) *Column 2, line 49 to column 5, line 55* | 1 | G 06 K 9/20 |
| | --- | | |
| Y | US-A-3 576 452 (MOTOROLA) *Column 2, line 46 to column 4, line 73* | 1 | |
| | --- | | |
| A | IBM TECHNICAL DISCLOSURE BULLETIN, vol. 8, no. 4, September 1965, pages 690-691, New York (USA); R.J.BRAUN: "Wide-response ampli-fier with automatic threshold control". *The whole article* | 1 | |
| | --- | | TECHNICAL FIELDS SEARCHED (Int. Cl. 3) |
| A | FR-A-1 356 613 (ASSOCIATED AUTOMATION) | 1 | |
| | ----- | | G 06 K |

The present search report has been drawn up for all claims

| Place of search | Date of completion of the search | Examiner |
|---|---|---|
| THE HAGUE | 28-10-1982 | FORLEN G.A. |